# EUROPEAN PATENT APPLICATION

(11) **EP 2 508 401 A1**
(43) Date of publication of application: **10.10.2012**
(21) Application number: 10842327.8
(22) Date of filing: 24.06.2010
(51) Int. Cl.: B60V 3/08, B64C 5/06

(54) **COMBINED AIRCRAFT**

(30) Priority: 11.01.2010 RU 2010100723
(71) Applicant: Filimonov, Alexandr Iosifovich, Tyumen 625048 (RU)
(72) Inventor: FILIMONOVA, Lyudmila Yakovlevna, Tyumen 625048 (RU)
(74) Representative: Bucher, Ralf Christian
(86) International application number: PCT/RU2010/000355
(87) International publication number: WO 2011/084081

(57) **Abstract**

The invention relates to aircraft on an air cushion. The aircraft comprises a disc-like body with a central tunnel, within which a streamlined body is mounted with a lifting propeller on the upper part thereof, said streamlined body being connected to aerodynamically profiled radial partition walls, a cabin, a power unit with pusher propellers, an air cushion in the form of an inflated toroidal balloon with a flexible surround, wheel-ski supports under the body, a gliding surface around the cabin and a hydrofoil behind the body, rotatable doors mounted at the tunnel entry, wings, a tail unit with a stabilizer and tail fin, said tail unit being mounted on the rear part of the body, jet flaps mounted on the rear parts of the wings and body, control and stabilization members in the form of air vanes mounted at the exit from the tunnel, jet vanes mounted on the stabilizer of the wings, and elevons mounted on the stabilizer. Longitudinal aerodynamic flanges are mounted on the front part of the disc-like body at the top on both sides of the tunnel. The invention is directed towards ensuring a stable controllable flight, increasing safety, increasing the lift and reducing the mass of the structure.

## Description

### FIELD OF THE INVENTION

The invention relates to aviation, in particular to aerial vehicles taking off and landing vertically using an air cushion or as an ordinary aircraft, making a run on takeoff and landing.

### BACKGROUND OF THE INVENTION

A prior art combination aerial vehicle (Russian Patent No. 2,012.512, published on May 15, 1994) comprises a disk-shaped center wing section provided with a vertical tunnel inside that has an open inlet and outlet and a lift airscrew fitted on a streamlined member and having a system to change the general and cyclic pitch of the airscrew blades, the cross-sectional area of the tunnel in the plane of lift airscrew rotation varying between 0.3 and 0.8 of the area of the landing gear air cushion, the tunnel inlet being formed by a torus surface adjoining the upper surface of the center wing section, side wings, a tail assembly comprising two keels placed on longitudinal tail beams and a horizontal stabilizer extending across the keels, a pilot and passenger cabin, an air cushion landing gear around the tunnel outlet, and a single power plant consisting of two engine units connected by transmission with the lift airscrew and two cruising airscrews.

The prior art combination aerial vehicle has the following deficiencies:
- high aerodynamic resistance and low carrying capacity of the center wing section in intermediate flight modes and in cruising flight because the tunnel inlet and outlet lack devices to control the direction of the airflow through the tunnel;
- unsteady movement on the air cushion, particularly in mid-flight and at takeoff and landing because of the absence of stabilizing members, for example, an additional wheel or wheel/ski undercarriage that steadies the aerial vehicle on the takeoff and landing strip against wind and on maneuvering;
- inadequate sensitivity and stabilization of the aerial vehicle in vertical intermediate flight modes because of the absence of additional controls, while using the lift airscrew provided with a system to vary the general and cyclic pitch for these purposes is ineffective because the airscrew is blanketed in the tunnel, rather than exposed to the airflow; and
- the single power plant consisting of engine units and a complicated mechanical transmissions requires large inputs of dead load and results in a low useful-to-takeoff load of the aerial vehicle.

These deficiencies were corrected in the combination aerial vehicle described in Russian Patent No. 2,092,381 published on October 10, 1997. The combination aerial vehicle of this patent comprises a disk-shaped body having a central tunnel containing a streamlined member provided with a lift airscrew on the top part thereof and connected to the walls by radial aerodynamic webs; lateral wing panels, and a tail assembly having horizontal planes and two or more keels provided in the aft part of the body; a power plant carrying propulsion airscrews; air cushion landing gear such as an inflatable torus balloon (landing balloon) having a flexible barrier at the front and side parts thereof in the form of wheel/ski supports mounted on the undersurfaces of the body as a gliding surface under the pilot-passenger cabin and a hydrofoil at the aft of the body; pivoted flaps provided at the inlet of the central tunnel; control and stabilization members in the form of air rudders provided at the outlet of the tunnel and as jet rudders provided on the horizontal planes and wing panels, and also as elevons provided on the horizontal planes, and also jet flaps provided on the trailing edges of the wing panels and body.

A disadvantage of the prior art aerial vehicle is its lateral instability (list) in crosswind or on maneuver (turning) in intermediate (takeoff and landing) modes, with its performance deteriorating as a result.

### SUMMARY OF THE INVENTION

It is a technical goal of this invention to develop a combination aerial vehicle of improved performance to make the aerial vehicle stable and controllable in all flight modes, particularly at takeoff and landing.

The technical result achieved by this invention is that the weight of the aerial vehicle is reduced, its reliability improved, its lift increased, and flight security improved, particularly upon failure of one of the cruising engines.

The above technical result is achieved in a combination aerial vehicle comprising a disk-shaped body having a central tunnel containing a streamlined member having a lift airscrew at the top thereof and connected to the tunnel walls by aerodynamic webs; a pilot-passenger cabin; a power plant having propulsion screws; air cushion landing gear such as an inflatable balloon having a flexible barrier in the front and side parts thereof and wheel/ski supports; a gliding surface under the pilot-passenger cabin and a hydrofoil at the aft of the body; pivoted flaps at the tunnel inlet; control and stabilization members at the tunnel outlet; wing panels; a tail assembly having a stabilizer and two or more keels in the aft part of the body; jet flaps provided on the trailing parts of the wing panels and body; jet rudders provided on the stabilizer and wing panels, and elevons provided on the stabilizer, said aerial vehicle being further provided with two or more aerodynamic fences in the forward part of the disk-shaped body in an upper position on both sides of the tunnel. The power plants may have separate drives for the lift airscrew and two or more cruising airscrews (each driven by its respective engine), or a single power plant may be provided, with the lift airscrew being driven by the gas exhausted by the engines such as gas generators of cruising propulsion screw units mounted on pylons at the aft of the body in the plane of the tail assembly components, in particular, the keels and stabilizer. The tunnel inlet, or tunnel manifold, may be designed as a torus of a generating radius equal to, or more than, 0.25 of the radius of the lift airscrew housed inside the tunnel, the cross-sectional area of the tunnel in the plane of the inlet manifold in which the lift airscrew has its plane of rotation is equal to, or less than, 0.3 of the support surface area of the airscrew within the torus balloon having a flexible barrier.

This design helps correct the lateral instability and some loss of control in takeoff and landing modes when the lift airscrew operates in crosswind and maneuvers because the aerodynamic fences provided on top and in front of the disk-shaped body prevent the airflow from entering the tunnel from aside. This design, therefore, prevents displacement of the center of the resultant aerodynamic lift force to the side and, as a result, development of the rolling moment that causes lateral instability and some loss of control.

Power plants having separate drives for the lift and cruising airscrews, or a single power plant having a gas drive for the lift airscrew, reduce significantly the dead weight of the power plants and improve their reliability as they dispense with a complicated transmission consisting of reducing gears, shafts, couplings, and the like that are typical of power plants having mechanical drives for the lift and cruising airscrews.

The cruising propulsion screw units mounted on pylons in the aft part of the body in the plane of the tail beams supporting the keels and in the stabilizer plane blow all the airflow produced by the airscrews around the tail assembly, making the aerial vehicle controllable and stable at low takeoff and landing speeds and upon failure of one of the cruising propulsion screw units.

The inlet manifold having a generating radius equal to, or more than, 0.25 of the lift airscrew radius increases significantly the lift of the disk-shaped body while the lift airscrew is running owing to the rarefaction over a large area above the body. In turn, the inlet manifold having a cross-sectional area less than 0.3 of the area of the air cushion support surface, with the diameter of the lift airscrew unchanged, increases the lift of the disk-shaped body significantly while the lift airscrew is running owing to the greater efficiency of the air cushion when the aerial vehicle moves on the air cushion.

### BRIEF DESCRIPTION OF THE DRAWINGS

The invention will now be described with reference to the drawings wherein:

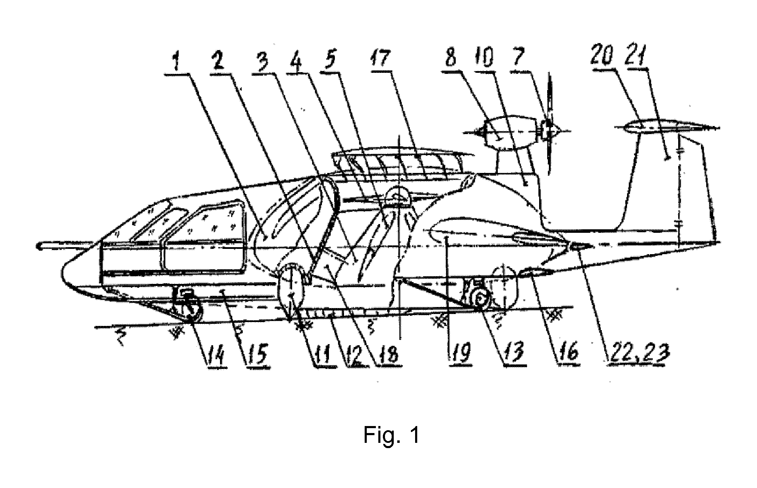

FIG. 1 is a side view of the combination aerial vehicle;

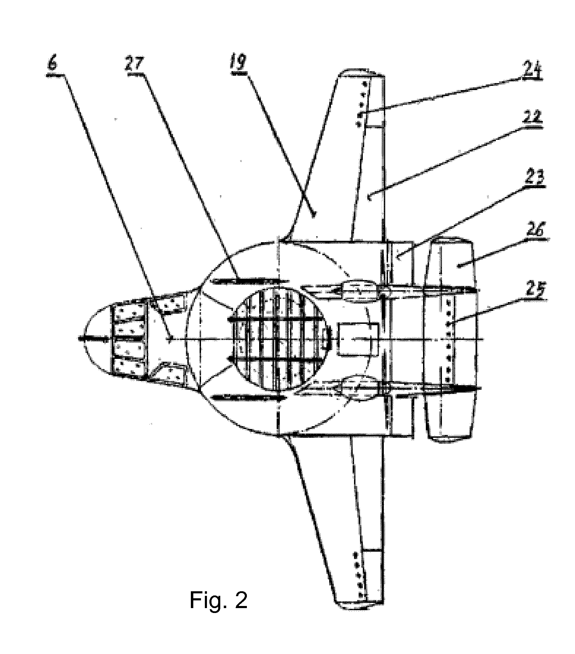

FIG. 2 is a plan view of the combination aerial vehicle;

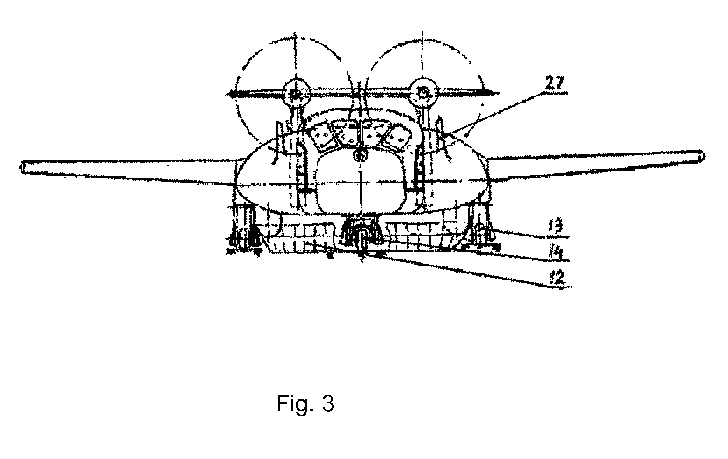

FIG. 3 is a front view of the combination aerial vehicle;

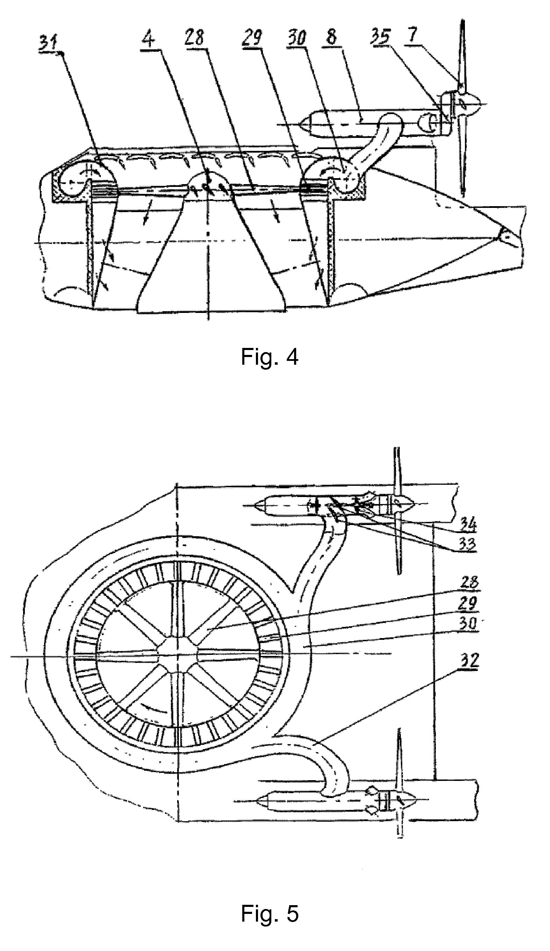

FIG. 4 is a side view of a single power plant driving the lift airscrew by gas; and
FIG. 5 is a top view of the single power plant.

### AN EMBODIMENT OF THE INVENTION

A combination aerial vehicle comprises a disk-shaped body 1 having a central tunnel 2 with a streamlined member 3 provided therein and having a lift airscrew 4 mounted at the top part thereof, said streamlined member being connected to the tunnel walls by radial aerodynamic webs 5; a pilot-passenger cabin 6; power plants driving separately the lift airscrew 4 and two or more cruising airscrews 7 by each engine 8, or a single power plant driving the lift airscrew 4 by gas exhausted from engines such as gas generators 9 of cruising propulsion screw units mounted on pylons 10 at the aft of the body 1; air cushion landing gear in the form of an inflatable torus balloon 11 provided with a flexible barrier 12 in the front and side parts thereof; wheel/ski supports 13 and 14 under the lower surface of the aerial vehicle; a gliding surface 15 under the pilot-passenger cabin 6 and a hydrofoil 16 at the aft of the body 1; pivoted flaps 17 at the inlet of the tunnel 2; control and stabilization members 18 provided at the outlet of the tunnel 2; wing panels 19; a tail assembly having a stabilizer 20 and keels 21 at the aft part of the body 1; jet flaps 22 and 23 provided on the trailing parts of the wing panels 19 and body 1; jet rudders 24 and 25 on the stabilizer 20 and wing panels 19; elevons 26 on the stabilizer 20; and longitudinal aerodynamic fences 27 provided on the forward part of the body 1 in the upper position on both sides of the tunnel 2.

It is reasonable to use a single power plant driving the lift airscrew 4 by gas for vertical takeoff.

A single gas drive power plant comprises two engines or gas generators 9 and two cruising propulsion airscrews 7; lift airscrew 4 connected at the ends of its blades 28 to a drive turbine 29; a gas manifold 30 combined with an inlet manifold 31 of the tunnel 2; and gas ducts 32 connected to the gas generator 9 housing pivoted shutters 33 ahead of a free power turbine 34 that is connected to a reducing gear 35 serving to drive the cruising airscrew 7. The inlet manifold 31 is a torus surface generated by a radius equal to, or more than, 0.25 of the radius of the lift airscrew 4. The cross-sectional area of the tunnel 2 in the plane of the inlet manifold 31, which is also the plane of rotation of the lift airscrew 4, is equal to, or less than, 0.3 of the area of the air cushion support surface defined by the torus balloon 11 having a flexible barrier 12.

The aerial vehicle takes off on the air cushion as a compressor (not shown) inflates the torus balloon 11 and the barrier 12 extends simultaneously across the forward part thereof. The lift aircrew is started up and runs until it attains its design power to direct the airflow into the air cushion interior defined by the torus balloon 11 and flexible barrier 12. Lift is produced by the air cushion along with the reactive lift force of the airscrew. The total lift is significantly greater if the generating radius of the inlet manifold is equal to, or greater than, 0.25 of the radius of the lift airscrew 4, and the ratio of the areas of the rotation plane of the lift airscrew 4 to the air cushion support surface is equal to, or smaller than, 0.3, provided that the pivoted shutters 17 are open. The wheel/ski supports 13 and 14 resting on the ground surface give the aerial vehicle the required cohesion therewith. At this point of time, the cruising propulsion screw units are started up. When the cruising propulsion screw units reach the design power, the aerial vehicle makes a run on its air cushion wheel/ski supports 13 and 14 that continue to maintain cohesion with the ground surface and set course. Steady movement on course during the takeoff run and climb is maintained by the airflow ej ected backward from the air cushion interior and the air flowing from the cruising airscrews 7 around the keels 21.

The aerodynamic fences 27 restrict penetration of the airflow into the tunnel 2 during maneuver or in crosswind and, in this way, prevent lateral instability, or list, at takeoff or landing.

The elevons 26 provided on the stabilizer 20 further contribute, along with the ailerons (not shown), to lateral balance at low-speed takeoff or landing as the cruising airscrews 7 direct their airflow at the elevons 26.

The jet flaps 22 and 23, as also the elevators (not shown), compensate for the significant pitch-up of the body 1 caused by the lift airscrew 4 running in the tunnel 2 and, as a result, give the desired longitudinal balance to the aerial vehicle.

As the aerial vehicle climbs up and begins flying horizontally, the lift airscrew 4 is stopped, the shutters 17 close the tunnel 2, the balloon 11 and flexible barrier 12 are retracted, and the required lift is produced by the body and wing panels 19.

On climb-down and landing, the aforesaid steps are performed in the reverse order - the torus balloon 11 and flexible barrier 12 are extended, the lift airscrew 4 is started up, and simultaneously the pivoted shutters 17 of the tunnel 2 are opened. The aerial vehicle lands on the wheel/ski supports 13 and 14, using its air cushion as well.

The gliding surface 15 and hydrofoil 16 are involved in the aerial vehicle taking off from, and landing on, water.

The combination aerial vehicle has a single power plant to drive the lift airscrew 4 by gas exhausted by the engines, or gas generators, 9 of the cruising propulsion screw units powerful enough for the aerial vehicle to take off and land vertically.

In this mode, the aerial vehicle takes off by first starting up the engines, or gas generators, 9 of the cruising propulsion screw units, the shutters 33 thereof turning to a position in which the gas flows are directed to the manifold 30 through the gas ducts 32. Gas flows to the drive turbine 29 that is connected to the ends of the blades 28 of the lift airscrew 4. Simultaneously, the pivoted shutters 17 open to admit air to the lift airscrew 4. As the number of revolutions and power of the drive turbine 29 and lift airscrew 4 increase, so does the lift force (mostly of the reactive type generated by the airscrew) equal to the weight of the aerial vehicle, which takes off vertically to a desired altitude where horizontal flight begins. For this purpose, the pivoted shutters 33 of the engines, or gas generators, 9 turn to deliver gas to the free power turbine 34 that rotates the cruising airscrew 7 through the reducing gear 35 to produce horizontal thrust and cause the aerial vehicle to fly horizontally. As the speed of horizontal flight increases, the aerodynamic force on the wing panels 19 and body 1 grows and the reactive lift force of the lift airscrew 4 decreases. When the aerodynamic lift is equal to the weight of the aerial vehicle, the drive of the lift airscrew 4 is deactivated by turning the shutters 33 to fully drive the free power turbine 34 that drives the cruising airscrew 7. The pivoted flaps 17 close the tunnel 2 completely. The vertical flight mode may be changed over to horizontal flight while climbing to a high altitude or at a low altitude.

The aerial vehicle is stabilized at vertical takeoff (landing), in the hovering mode, and at low-speed flight mode changes (vertical to horizontal and back) by control and stabilization members 18 provided at the outlet of the tunnel 2 and jet rudders 24 and 25 provided on the stabilizer 20 and wing panels 19.

The claimed combination aerial vehicle is stable and controllable in flight, at takeoff from, and landing on, firm ground, loose ground, and water as a result of its lateral stability improved by aerodynamic fences, longitudinal stability and controllability by elevons and jet flaps and rudders, and is very efficient owing to reduction in the dead weight of its power plants. Moreover, this combination aerial vehicle can be operated from prepared runways, or in their absence, that is, it does not require airfields to be operated from.

## Claims

1. A combination aerial vehicle comprising a disk-shaped body having a central tunnel containing a streamlined member provided with a lift airscrew in the upper part thereof and connected to the tunnel walls by aerodynamic radial webs; a pilot-passenger cabin; a power plant having propulsion screws; air cushion landing members in the form of a torus balloon having a flexible barrier in the forward and side parts thereof; wheel/ski supports under the lower surface thereof; a gliding surface under the pilot-passenger cabin and a hydrofoil at the aft of the body; pivoted flaps at the inlet of the tunnel; control and stabilization members at the outlet of the tunnel; wing panels; a tail assembly having a stabilizer and two or more keels provided at the aft of the body; jet flaps provided on the trailing parts of the wing panels and body; jet rudders provided on the stabilizer and wing panels; and elevons provided on the stabilizer, wherein two or more longitudinal aerodynamic fences are provided on the forward part of the disk-shaped body in an upper position on both sides of the tunnel.

2. A combination aerial vehicle as claimed in claim 1, wherein the power plants have separate drives for the lift airscrew and two or more cruising airscrews, or a single power plant is provided to drive the lift airscrew by the gas exhausted by the engines, or gas generators, of cruising propulsion screw units mounted on pylons at the aft of the body in the plane of the keels and stabilizer that are parts of the tail assembly.

3. A combination aerial vehicle as claimed in claim 1, wherein the inlet of the tunnel, or the inlet manifold, is a torus surface having a generating radius equal to, or more than, 0.25 of the radius of the lift airscrew.

4. A combination aerial vehicle as claimed in claim 1, wherein the cross-sectional area of the tunnel in the plane of the inlet manifold, in which the lift airscrew has its plane of rotation, is equal to, or less than 0.3, of the support surface area of the air cushion encircled by the torus balloon provided with a flexible barrier.
